# EUROPEAN PATENT SPECIFICATION

(11) **EP 0 840 103 B1**
(45) Date of publication and mention of the grant of the patent: **23.04.2003**
(21) Application number: 97115619.5
(22) Date of filing: 09.09.1997
(51) Int. Cl.: G01M 1/04

(54) **Universal centering device for balancing machines for wheels of motor vehicles**
Universelle Zentriervorrichtung für Auswuchtmaschinen für Fahrzeugräder
Dispositif universel de centrage pour machines d'équilibrage de roues de véhicules

(30) Priority: 05.11.1996 IT MI962296
(43) Date of publication of application: 06.05.1998
(73) Proprietor: Buzzi, Carlo, 22054 Mandello del Lario (Lecco) (IT)
(72) Inventor: Buzzi, Carlo, 22054 Mandello del Lario (Lecco) (IT)
(74) Representative: Modiano, Guido, Dr.-Ing.

(56) References cited:
- EP-A- 0 014 138
- EP-A- 0 056 544
- FR-A- 2 334 094
- FR-A- 2 377 624

## Description

The present invention relates to a device for correctly centering various kinds of motor vehicle wheel on balancing machines. EP-A-0 056 544 discloses a nose unit for a vehicle-wheel balancing machine which has the features as included in the precharacterizing portion of the appended claim 1.

Conventionally, in order to achieve good balancing of motor vehicle wheels it is essential for the balancing machine to have a centering system capable of reproducing as accurately as possible the centering used on the vehicle.

Correct balancing of a rotating body, and particularly of a tire-fitted wheel for motor vehicles, in fact heavily depends on, or is in any case affected by, the more or less precise match between the rotation axis of the rotating body when it is in use and the axis of the rotating shaft fitted on the balancing machine; in other words, in order to allow the rotation axes of the balancing machine shaft and of the rotating body in use to be as mutually close as possible, it is necessary to use on the balancing machine the same mechanical centering used when said rotating body is in normal use.

In the particular case of motor vehicle wheels, the central hole of the wheel rim is used as reference means for centering, whilst said wheel is fixed to the hub of the vehicle axle shaft by means of bolts which pass through various fixing holes formed in said rim, peripherally with respect to the central centering hole.

It is also known that currently the method for the manufacture of wheel rims usually does not ensure perfect concentricity of the central through or blind hole of the wheel with respect to the imaginary circle that passes through the centers of the fixing holes (generally 3 to 5 holes) of said wheel.

In this particular situation, significant problems arise as regards proper centering on balancing machines, especially for wheels without a through central hole. These wheels are in fact usually fixed to the balancing machine by means of flanges to which threaded posts are applied in a concentric position. Centering on the balancing machine is therefore provided on the fixing holes, not on the central hole, so that because of the above-mentioned reasons linked to the wheel manufacturing method it is possible to introduce a centering error which negatively affects wheel balancing. One system currently used to solve this problem is to fix, at the center of the flange of the balancing machine, a cylindrical element whose diameter is identical to the diameter of the centering hub provided on the vehicle. This method is not practical to use, since it is necessary to replace the centering element for each wheel hole diameter. Since each automaker uses a different hub centering hole diameter, the cylindrical bodies that must be replaced on the flange are too many for generalized use of the balancing machine. The cylindrical body furthermore does not allow to recover the coupling play which is inevitably present in a centering between a cylindrical body and a hole owing to wheel hole manufacturing tolerances, which are often on the order of 0.2 mm on the diameter.

Accordingly, the aim of the present invention is to provide a centering device for balancing machines for rotating bodies, particularly for wheels of motor vehicles and the like, which is conceived and structured so as to fully obviate the drawbacks and shortcomings of currently used motor vehicle wheel centering systems.

Another object of the present invention is to provide an automatic centering device for balancing machines which is structured so as to allow perfect centering of metal wheels and/or of similar rotating bodies which have a through or blind central hole and a number of peripheral holes which usually varies between 3 and 5.

Another object of the invention is to provide a centering device of the above-specified type which is structured so that it is easy to use, highly reliable, very compact and most of all structurally simple, with evident practical and economical advantages.

In accordance with the invention, there is provided a mechanical centering device for motor vehicle wheels, as defined in the appended claims.

The particular characteristics and advantages of the present invention will become apparent from the following detailed description given with reference to the accompanying drawing, which is provided merely by way of non-limitative example and wherein:
figure 1 is a diametrical and longitudinal sectional view of the motor vehicle wheel centering device for balancing machines, executed according to the invention; and
figure 2 is a front view of the same device as figure 1, said figure 1 being a sectional view thereof taken along the multiple planes I-I.

With reference to the above figures, the centering device according to the present invention is used in a balancing machine having a horizontal rotating shaft 1 and a bracket mounting 2 for motor vehicle wheels R; the supporting frame, the means for transmitting the motion of the shaft 1 and the corresponding bracket mounting 2 are of a conventional kind and are therefore not shown in the above figures.

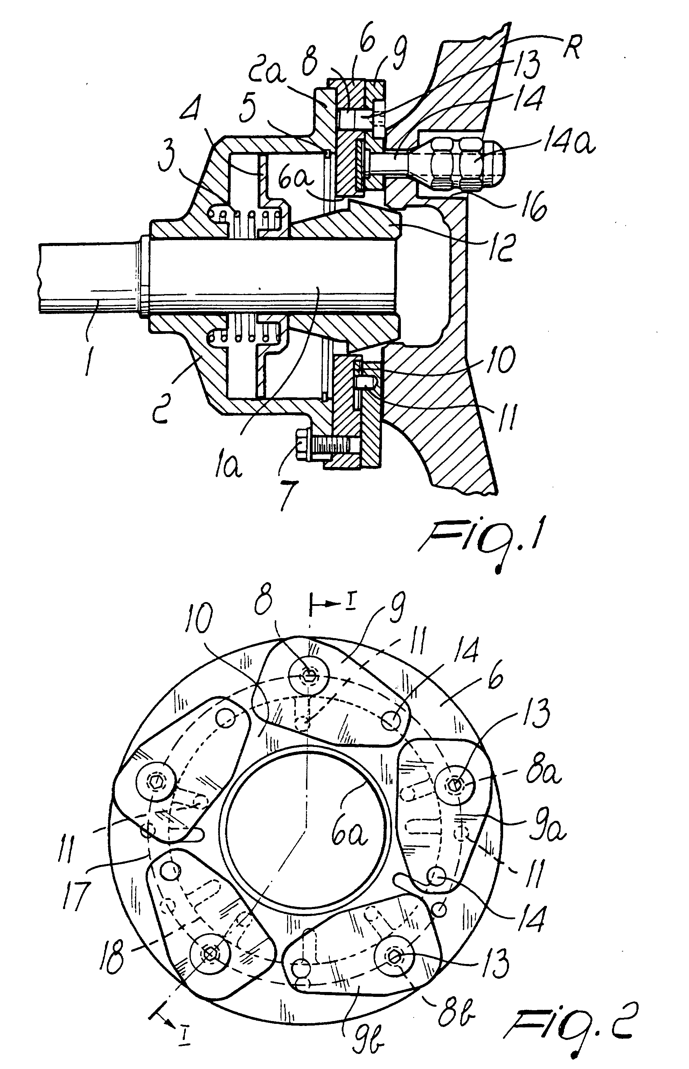

According to the invention, the universal centering device (i.e., for wheels having three or more holes for bracket-like mounting substantially cup-shaped is substantially constituted by a flange 2 which is rigidly coupled to the free end of the rotating shaft 1 so as to enclose inside it a portion 1a of the shaft 1, as shown in figure 1.

The cup-shaped flange 2 ends with a peripheral rim 2a which is directed outward so that its outer annular face is flat and arranged vertically with respect to the shaft 1.

A cylindrical spring 3 is furthermore arranged inside the cup-shaped body of the flange 2 and is interposed between the bottom of the cup-shaped body 2 and a circular plate 4 which can move until it abuts against a stop ring 5. The spring 3 3 is preloaded so as to keep the circular plate against the ring 5 when the centering device is not in use.

A disk-like plate 6 is stably anchored, by means of bolts 7 (figure 1), to the flat face of the rim 2a of the cup-shaped flange 2 and has an internal cylindrical cavity 6a whose diameter is different from the diameter of the flange 2, as will become apparent hereinafter.

Equidistant threaded holes 8-8d, preferably five, are formed in said plate 6; pivots 13 are fixed in said holes 8-8d, and each pivot supports a secondary plate which acts as a rotating linkage 9-9d; a post 14 is anchored on each linkage for mounting a wheel R by means of conventional lock nuts 14a.

More particularly, the number of holes 8-8d and their angular arrangement are such as to allow to mount three or four or five linkages 9-9d, in order to allow to mount wheels with three or four or five peripheral holes 16 (figure 1).

As shown in figure 2, all the holes 8 around which the linkages 9 can rotate are angularly equidistant along a circle 17, whilst the angular position of the linkages 9, which determines the circle 18 on which the posts 14 are arranged, is kept the same for all the rotating linkages by means of a disk 10, which is mounted so that it can rotate freely and coaxially to the shaft 1 and to the annular plate 6 and on the peripheral region whereof there are provided radial slots 19 inside which pins 11, which protrude from all the linkages, are freely accommodated.

In the case shown in figure 2, since the five linkages all have the same angular arrangement, the corresponding pins 11 are at the bottom end of the respective slots, whilst by varying the angular position of even just one linkage, the pin 11 of said linkage moves the disk 10 in an angular fashion and accordingly the pins of the other linkages are also moved; as a result, all the linkages assume the angular position that corresponds to the position assumed by the linkage rotated previously.

The condition by which all the linkages are orientated in the same way for every angular movement of a single linkage obviously occurs regardless of the number of linkages anchored in the holes 8-8d; this means that the posts too can vary in number (generally from 3 to 5) and allow to mount wheels with three or four or five holes.

The centering device is furthermore provided with a substantially frustum-shaped body 12, which can move freely and coaxially to the shaft 1 (figure 1) and in which the end that lies deeper inside the flange is in contact with the moving circular plate 4.

The maximum diameter of said frustum-shaped body is provided equal to the diameter of the internal hole 6a of the disk-like plate 6 and is shaped so as to match and easily center most of the central holes provided on current motor vehicle wheels.

Accordingly, a wheel is mounted on the flange 2 by providing a number of linkages and therefore of posts which is equal to the number of mounting holes of the wheel to be balanced, for example four posts, using said method of rotating one linkage to make the other three linkages assume the same angular position as the one rotated initially and of then inserting the central hole of the wheel on the movable frustum-shaped body and of then inserting the posts, which are already equidistant like the holes of the wheel, into the holes of said wheel and finally of fixing the wheel to the flange, tightening the nuts 14a on the threaded part of the posts 14 (figure 1).

From the above description it is evident that structurally and functionally equivalent modifications and variations can in practice be applied to the present invention without abandoning the scope of the protection of the invention as claimed.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A centering device for balancing machines for wheels of motor vehicles having wheels (R) with a variable number of mounting holes (16), particularly for machines provided with a rotating shaft (1) which has a horizontal axis and with a bracket mounting for said wheel (R) which is rigidly anchored to the free end of said rotating shaft (1), comprising a substantially cup-shaped flange (2) which is coaxially rigidly coupled to the free end of said rotating shaft (1) and inside which a hollow frustum-shaped centering body (12) is fitted so that it can slide freely on the free end of said shaft (1), said centering body (12) being pushed towards the outside of said flange (2) by at least one preloaded spring (3) and being meant to be inserted in the central hole of the wheel (R), flat elements (9, 9a, 9b) shaped like rotating linkages, each linkage (9, 9a, 9b) supporting a post (14) which has a threaded free end and is suitable to allow the bracket-like mounting of the wheel (R) on the flange (2) and the simultaneous forcing of the frustum-shaped body (12) in the central hole of said wheel (R), a disk-like ring (10) being coaxial to the shaft (1) and rotating freely with respect to an annular plate (6), slots (19) being formed therein, a pin (11) being engaged in each one of said slots (19), said pin (11) protruding from each linkage (9, 9a, 9b) in order to allow, through the partial angular movement of even just one post-supporting linkage (9, 9a, 9b), the simultaneous movement of all the other linkages (9, 9a, 9b) in the corresponding angular position, regardless of the number of linkages and therefore of posts (14) required to lock the wheel (R), **characterized in that** said slots are radial slots (19), and the annular plate (6) is being anchored to the peripheral rim (2a) of said flange (2), said plate (6) having equidistant holes (8, 8a, 8b) arranged in a circle (17) which is coaxial to said shaft (1), the flat elements (9, 9a, 9b) shaped like rotating linkages being pivoted in said holes (8, 8a, 8b)of said plate (6), said disk-like ring (10) being connected with said annular plate (6) that supports the linkages (9, 9a, 9b), said disk-like ring (10) rotating freely with respect to said annular plate (6).

2. A centering device according to claim 1, **characterized in that** the maximum diameter of said frustum-shaped hollow body (12) is equal to the diameter of the internal cylindrical cavity (6a) of said annular plate (6) provided with the rotation holes (8, 8a, 8b) of said linkages (9, 9a, 9b).

3. A centering device according to claims 1 and 2, **characterized in that** said preloaded spring (3), which is suitable to push said frustum-shaped body (12), is a preferably cylindrical spiral spring which is coaxial to said shaft (1) and is interposed between the bottom of said cup-shaped flange (2) and a circular plate (4) which can move coaxially to the rotating shaft (1) and is arranged, in the inactive condition, in contact with the end of said frustum-shaped body (12).

4. A centering device according to any one of the preceding claims, **characterized in that** it is provided with a number of linkages (9, 9a, 9b) and corresponding posts (14) which can vary substantially from three to five, so as to allow to mount on the cup-shaped flange (2) the wheels (R) which have three, four or five mounting holes (16).

## Patentansprüche

1. Zentriervorrichtung für Auswuchtmaschinen für Fahrzeugräder, mit Rädern (R), die eine unterschiedliche Anzahl von Befestigungslöchern (16) aufweisen, insbesondere für Maschinen, die mit einer drehbaren Welle (1) versehen sind, die eine horizontale Achse hat und mit einer Trägerbefestigung für das Rad (R) versehen ist, die mit dem freien Ende der drehbaren Welle (1) fest verbunden ist, umfassend einen im Wesentlichen schalenförmigen Flansch (2), der geeignet ist, coaxial fest mit dem freien Ende der drehbaren Welle (1) verbunden zu werden und innerhalb dessen ein hohler kegelstumpfförmiger Zentrierkörper (12) angebracht ist, so dass er frei auf dem freien Ende der Welle (1) gleiten kann, wobei der Zentrierkörper (12) mittels mindestens einer vorgespannten Feder (3) in Richtung der Außenseite des Flansches (2) gedrückt wird und bestimmt ist, in das zentrale Loch des Rades (R) eingesetzt zu werden, flache Elemente (9, 9a, 9b) als drehbare Verbindungen gestaltet sind, wobei jede Verbindung (9, 9a, 9b) eine Stütze (14) trägt, die ein mit einem Gewinde versehenes freies Ende aufweist und geeignet ist, die trägerartige Befestigung des Rades (R) am Flansch (2) und die gleichzeitige Bewegung des kegelstumpfförmigen Körpers (12) in das zentrale Loch des Rades (R) zu erlauben, wobei ein scheibenförmiger Ring (10) coaxial zur Welle (1) und frei drehbar bezüglich einer ringförmigen Platte (6) ist, Schlitze (19) darin gebildet sind, ein Stift (11) in jeden der Schlitze (19) eingreift, wobei sich der Stift (11) von jeder Verbindung (9, 9a, 9b) erstreckt, um, durch die teilweise kreisförmige Bewegung von gerade einer stützengetragenen Verbindung (9, 9a, 9b), die gleichzeitige Bewegung aller anderen Verbindungen (9, 9a, 9b) in die entsprechende Winkelposition zu erreichen, unabhängig von der Anzahl der Verbindungen und infolgedessen der Stützen (14), die erforderlich sind, um das Rad (R) festzuhalten, **dadurch gekennzeichnet, dass** die Schlitze Radialschlitze (19) sind, und die ringförmige Platte (6) mit dem Umfangsrand (2a) des Flansches (2) befestigt ist, wobei die Platte (6) im gleichen Abstand Löcher (8, 8a, 8b) aufweist, die in einem Kreis (17) angeordnet sind, der coaxial zur Welle (1) ist, die flachen Elemente (9, 9a, 9b), die als drehbare Verbindungen gestaltet sind, in den Löchern (8, 8a, 8b) der Platte (6) schwenkbar sind, der scheibenförmige Ring (10) mit der ringförmigen Platte (6), die die Verbindungen (9, 9a, 9b) trägt, verbunden ist, und der scheibenförmige Ring (10) bezüglich der ringförmigen Platte (6) frei drehbar ist.

2. Zentriervorrichtung nach Anspruch 1, **dadurch gekennzeichnet, dass** der maximale Durchmesser des kegelstumpfförmigen Hohlkörpers (12) gleich dem Durchmesser des inneren zylindrischen Hohlraumes (6a) der ringförmigen Platte (6) ist, die mit den Schwenklöchern (8, 8a, 8b) der Verbindungen (9, 9a, 9b) versehen ist.

3. Zentriervorrichtung nach einem der Ansprüche 1 und 2, **dadurch gekennzeichnet, dass** die vorgespannte Feder (3), die geeignet ist, den kegelstumpfförmigen Körper (12) zu drücken, vorzugsweise eine zylindrische Spiralfeder ist, die coaxial zur Welle (1) ist und zwischen dem Boden des schalenförmigen Flansches (2) und einer kreisförmigen Platte (4), die sich coaxial zur drehbaren Welle (1) bewegen kann, angeordnet ist, und in inaktivem Zustand sich in Kontakt mit dem Ende des kegelstumpfförmigen Körpers (12) befindet.

4. Zentriervorrichtung nach einem der vorstehenden Ansprüche, **dadurch gekennzeichnet, dass** sie mit einer Anzahl von Verbindungen (9, 9a, 9b) und korrespondierenden Stützen (14), die im Wesentlichen von drei bis fünf variieren können, versehen ist, um so auf dem schalenförmigen Flansch (2) die Befestigung der Räder (R), die drei, vier oder fünf Befestigungslöcher (16) aufweisen, zu gestatten.

## Revendications

1. Un dispositif de centrage pour des machines à équilibrer les roues de véhicules à moteur pourvu de roues (R) présentant un nombre variable de trous de montage (16), en particulier pour des machines munies d'un arbre rotatif (1) à axe horizontal et pourvues d'un montage de support pour ladite roue (R) qui est rigidement fixée à l'extrémité libre dudit arbre rotatif (1), présentant une bride (2) sensiblement en forme de cloche qui est susceptible d'être rigidement et coaxialement couplée à l'extrémité libre dudit arbre rotatif (1) et à l'intérieur de laquelle bride est monté un corps de centrage (12) en tronc de cône, de sorte qu'il puisse coulisser librement à l'extrémité libre dudit arbre (1), ledit corps de centrage (12) étant poussé vers l'extérieur de ladite bride (2) par au moins un ressort précontraint (3) et étant destiné à être inséré dans le trou central de la roue (R), comprenant en outre des éléments plats (9, 9a, 9b) présentant une conformation de biellettes rotatives, chaque biellette (9, 9a, 9b) supportant une broche (14) à extrémité libre filetée et qui est apte à permettre le montage en support de la roue (R) sur la bride (2) et le montage simultané à force du corps (12) en forme de tronc de cône dans le trou central de ladite roue (R), une bague (10) en forme de disque étant coaxiale à l'arbre (1) et tournant librement par rapport à une plaque annulaire (6), des rainures (19) étant formées à l'intérieur, une broche (11) étant engagée dans chacune desdites rainures (19), ladite broche (11) faisant saillie de chaque biellette (9, 9a, 9b) afin de permettre, par déplacement angulaire partiel d'uniquement une biellette (9, 9a, 9b) support de broche, le déplacement simultané de toutes les autres biellettes (9, 9a, 9b) dans la position angulaire correspondante, indépendamment du nombre de biellettes et par conséquent de broches (14) nécessaires pour bloquer la roue (R), **caractérisé en ce que** lesdites rainures sont des rainures radiales (19), et **en ce que** la plaque annulaire (6) est fixée fermement au rebord périphérique (2a) de ladite bride (2), ladite plaque (6) présentant des trous équidistants (8, 8a, 8b) disposés sur un cercle (17) qui est coaxiale audit arbre (1), les éléments plats (9, 9a, 9b) présentant la conformation de biellettes rotatives étant articulés à pivotement dans lesdits trous (8, 8a, 8b) de ladite plaque (6), ladite bague (10) en forme de disque étant reliée à ladite plaque annulaire (6) qui supporte les biellettes (9, 9a, 9b), ladite bague (10) en forme de disque tournant librement par rapport à ladite plaque annulaire (6).

2. Un dispositif de centrage selon la revendication 1, **caractérisé en ce que** le diamètre maximum dudit corps creux (12) en forme de tronc de cône est égal au diamètre de la cavité cylindrique interne (6a) de ladite plaque annulaire (6) munie des trous de rotation (8, 8a, 8b) desdites biellettes (9, 9a, 9b).

3. Un dispositif de centrage selon les revendications 1 et 2, **caractérisé en ce que** ledit ressort précontraint (3), qui est apte à pousser ledit corps (12) en forme de tronc de cône, est un ressort hélicoïdal de préférence cylindrique qui est coaxial audit arbre (1) et est interposé entre le fond de ladite bride (2) en forme de cloche et une plaque circulaire (4) qui peut se déplacer coaxialement à l'arbre rotatif (1) et qui est qui est disposé, à l'état inactif, en contact avec l'extrémité dudit corps (12) en forme de tronc de cône.

4. Un dispositif de centrage selon l'une quelconque des revendications précédentes, **caractérisé en ce qu'**il est muni d'un certain nombre de biellettes (9, 9a, 9b) et de broches (14) correspondantes qui peut varier sensiblement de trois à cinq, de sorte à permettre de monter sur la bride (2) en forme de cloche les roues (R) qui comportent trois, quatre, ou cinq trous de montage (16).
